# EUROPEAN PATENT SPECIFICATION

(11) **EP 1 945 693 B1**
(45) Date of publication and mention of the grant of the patent: **13.08.2014**
(21) Application number: 06816043.1
(22) Date of filing: 03.10.2006
(51) Int. Cl.: C08G 77/445, C08G 63/695

(54) **POLYARYLATE-SILOXANE COPOLYMERS**
POLYARYLAT-SILOXAN-COPOLYMERE
COPOLYMERES POLYARYLATE-SILOXANE

(30) Priority: 11.10.2005 US 247535
(43) Date of publication of application: 23.07.2008
(73) Proprietor: Momentive Performance Materials Inc., Wilton CT 06897-4122 (US)
(72) Inventor: MCLAUGHLIN, Michael, Jeffrey, Albany, NY 12208 (US); O'BRIEN, Michael, Joseph, Clifton Park, NY 12065 (US)
(74) Representative: Thoma, Michael
(86) International application number: PCT/US2006/038467
(87) International publication number: WO 2007/047083

(56) References cited:
- US-A- 5 608 026
- US-A1- 4 894 427

## Description

### BACKGROUND

The invention relates generally to polyarylate-siloxane copolymers. More particularly the present invention relates to polyarylate-siloxane copolymers that have good flow characteristics and also possess good thermostability and weatherability.

Polymer compositions for use in a variety of modern applications often require outstanding physical characteristics such as high surface quality, solvent resistance, scratch resistance, strong adhesion to other materials, good weatherability, and UV stability. Known polyarylates perform well in some, but not all, of these categories. Some enhancement of polyarylate performance may be obtained through the use of additives but performance limitations remain nonetheless.

Therefore there exists a need for new polymeric compositions possessing enhanced performance characteristic relative to known materials.

US 4,894,427 A1 may be considered the closest prior art to the present invention. The document discloses an aromatic polyester-polyorganosiloxane block copolymer constituted of a polyester segment constituted mainly of: (a) an aromatic polyester constituted of an aromatic dicarboxylic acid and a dihydric phenol, a lower aliphatic diol or an alicyclic diol, (b) an aromatic polyester constituted of an aromatic hydroxycarboxylic acid, (c) a copolymer constituted of (a) and (b), and a polyorganosiloxane segment having a recurring siloxane units of which the bonding part between the polyester segment and the polyorganosiloxane segment is an ester linkage formed by a condensation reaction between the terminal carboxyl group of the polyester segment and the terminal hydroxyl group of the polyorganosiloxane segment.

### BRIEF DESCRIPTION

In one embodiment, the present invention provides a composition comprising a polyarylate-siloxane copolymer comprising arylate structural units having Formula I 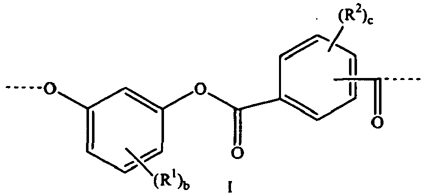 wherein R¹ and R² are independently at each occurrence a halogen atom, a nitro group, a C₁-C₂₀ aliphatic radical, a C₃-C₂₀ cycloaliphatic radical, or a C₃-C₂₀ aromatic radical; "b" and "c" are independently integers having a value 0 to 4; and
at least one organosiloxane structural unit,
wherein said polyarylate-siloxane copolymer is free of organic carbonate linkages.

In another embodiment, the present invention provides a method for preparing a composition comprising, reacting at least one dihydroxy aromatic compound III 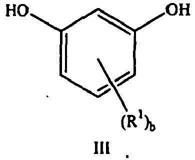 and at least one aromatic dicarboxylic acid halide IV 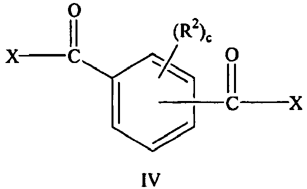 and at least one hydroxy organosiloxane compound, in the presence of at least one catalyst and at least one substantially water-immiscible organic solvent to provide a polyarylate-siloxane copolymer comprising structural units XVIII 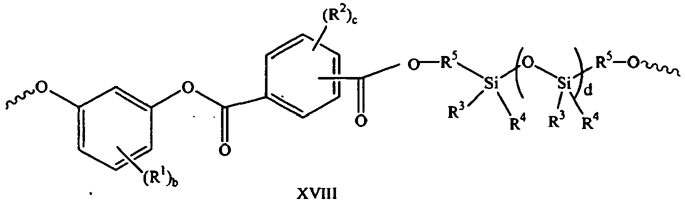 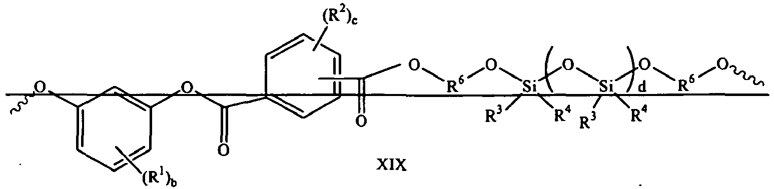 wherein R¹ and R² are independently at each occurrence a halogen atom, a nitro group, a C₁-C₂₀ aliphatic radical, a C₃-C₂₀ cycloaliphatic radical, or a C₃-C₂₀ aromatic radical; "b" and "c" are independently integers having a value from 0 to 4; R³ and R⁴ are independently at each occurrence a hydrogen atom, a hydroxyl group, a C₁-C₂₀
aliphatic radical, a C₃-C₂₀ cycloaliphatic radical, a C₃-C₂₀ aromatic radical, or R³ and R⁴ may together form a silicon-containing C₃-C₂₀ cycloaliphatic radical or a C₃-C₂₀ aromatic radical; R⁵ is a C₁-C₂₀ aliphatic radical, a C₃-C₂₀ cycloaliphatic radical, or a C₃-C₂₀ aromatic radical; and "d" is an integer having a value from 1 to about 500.

In yet another aspect, the present invention provides a molded article comprising the polyarylate-siloxane composition disclosed herein.

In yet another aspect, the present invention provides a polyarylate-siloxane composition prepared by the method disclosed herein.

### DETAILED DESCRIPTION

The present invention may be understood more readily by reference to the following detailed description of preferred embodiments of the invention and the examples included therein. In the following specification and the claims which follow, reference will be made to a number of terms which shall be defined to have the following meanings:
The singular forms "a", "an" and "the" include plural referents unless the context clearly dictates otherwise.
"Optional" or "optionally" means that the subsequently described event or circumstance may or may not occur, and that the description includes instances where the event occurs and instances where it does not.
The modifier "about" used in connection with a quantity is inclusive of the stated value and has the meaning dictated by the context (e.g., includes the degree of error associated with measurement of the particular quantity).

As used herein, the term "organosiloxane structural unit" is defined as a component of a polymer or a monomer, said component comprising at least one organic ----SiOSi---- moiety. The moiety is defined as an "organic" --SiOSi---- moiety because each of the silicon atoms is directly bound to at least one carbon atom. Thus, the polyarylate-siloxane copolymers of the present invention comprise at least one organic ----SiOSi--- moiety.

As used herein, the term "aromatic radical" refers to an array of atoms having a valence of at least one comprising at least one aromatic group. The array of atoms having a valence of at least one comprising at least one aromatic group may include heteroatoms such as nitrogen, sulfur, selenium, silicon and oxygen, or may be composed exclusively of carbon and hydrogen. As used herein, the term "aromatic radical" includes but is not limited to phenyl, pyridyl, furanyl, thienyl, naphthyl, phenylene, and biphenyl radicals. As noted, the aromatic radical contains at least one aromatic group. The aromatic group is invariably a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2), anthraceneyl groups (n = 3) and the like. The aromatic radical may also include nonaromatic components. For example, a benzyl group is an aromatic radical, which comprises a phenyl ring (the aromatic group) and a methylene group (the nonaromatic component). Similarly a tetrahydronaphthyl radical is an aromatic radical comprising an aromatic group (C₆H₃) fused to a nonaromatic component -(CH₂)₄-. For convenience, the term "aromatic radical" is defined herein to encompass a wide range of functional groups such as alkyl groups, alkenyl groups, alkynyl groups, haloalkyl groups, haloaromatic groups, conjugated dienyl groups, alcohol groups, ether groups, aldehydes groups, ketone groups, carboxylic acid groups, acyl groups (for example carboxylic acid derivatives such as esters and amides), amine groups, nitro groups, and the like. For example, the 4-methylphenyl radical is a C₇ aromatic radical comprising a methyl group, the methyl group being a functional group which is an alkyl group. Similarly, the 2-nitrophenyl group is a C₆ aromatic radical comprising a nitro group, the nitro group being a functional group. Aromatic radicals include halogenated aromatic radicals such as 4-trifluoromethylphenyl, hexafluoroisopropylidenebis(4-phen-1-yloxy) (i.e., - OPhC(CF₃)₂PhO-), 4-chloromethylphen-1-yl, 3-trifluorovinyl-2-thienyl, 3-trichloromethylphen-1-yl (i.e., 3-CCl₃Ph-), 4-(3-bromoprop-1-yl)phen-1-yl (i.e., 4-BrCH₂CH₂CH₂Ph-), and the like. Further examples of aromatic radicals include 4-allyloxyphen-1-oxy, 4-aminophen-1-yl (i.e., 4-H₂NPh-), 3-aminocarbonylphen-1-yl (i.e., NH₂COPh-), 4-benzoylphen-1-yl, dicyanomethylidenebis(4-phen-1-yloxy) (i.e., -OPhC(CN)₂PhO-), 3-methylphen-1-yl, methylenebis(4-phen-1-yloxy) (i.e., - OPhCH₂PhO-), 2-ethylphen-1-yl, phenylethenyl, 3-formyl-2-thienyl, 2-hexyl-5-furanyl, hexamethylene-1,6-bis(4-phen-1-yloxy) (i.e., -OPh(CH₂)₆PhO-), 4-hydroxymethylphen-1-yl (i.e., 4-HOCH₂Ph-), 4-mercaptomethylphen-1-yl (i.e., 4-HSCH₂Ph-), 4-methylthiophen-1-yl (i.e., 4-CH₃SPh-), 3-methoxyphen-1-yl, 2-methoxycarbonylphen-1-yloxy (e.g., methyl salicyl), 2-nitromethylphen-1-yl (i.e., 2-NO₂CH₂Ph), 3-trimethylsilylphen-1-yl, 4-t-butyldimethylsilylphenl-1-yl, 4-vinylphen-1-yl, vinylidenebis(phenyl), and the like. The term "a C₃ - C₁₀ aromatic radical" includes aromatic radicals containing at least three but no more than 10 carbon atoms. The aromatic radical 1-imidazolyl (C₃H₂N₂-) represents a C₃ aromatic radical. The benzyl radical (C₇H₇-) represents a C₇ aromatic radical.

As used herein the term "aliphatic radical" refers to an organic radical having a valence of at least one consisting of a linear or branched array of atoms, which is not cyclic. Aliphatic radicals are defined to comprise at least one carbon atom. As defined herein, the term "aliphatic radical" encompasses a cyano group since the cyano group consists of a linear array of atoms which includes a carbon atom. The array of atoms comprising the aliphatic radical may include heteroatoms such as nitrogen, sulfur, silicon, selenium and oxygen or may be composed exclusively of carbon and hydrogen. For convenience, the term "aliphatic radical" is defined herein to encompass, as part of the "linear or branched array of atoms which is not cyclic" a wide range of functional groups such as alkyl groups, alkenyl groups, alkynyl groups, haloalkyl groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylpent-1-yl radical is a C₆ aliphatic radical comprising a methyl group, the methyl group being a functional group which is an alkyl group. Similarly, the 4-nitrobut-1-yl group is a C₄ aliphatic radical comprising a nitro group, the nitro group being a functional group. An aliphatic radical may be a haloalkyl group which comprises one or more halogen atoms which may be the same or different. Halogen atoms include, for example; fluorine, chlorine, bromine, and iodine. Aliphatic radicals comprising one or more halogen atoms include the alkyl halides trifluoromethyl, bromodifluoromethyl, chlorodifluoromethyl, hexafluoroisopropylidene, chloromethyl, difluorovinylidene, trichloromethyl, bromodichloromethyl, bromoethyl, 2-bromotrimethylene (e.g., -CH₂CHBrCH₂-), and the like. Further examples of aliphatic radicals include allyl, aminocarbonyl (i.e., - CONH₂), carbonyl, 2,2-dicyanoisopropylidene (i.e., -CH₂C(CN)₂CH₂-), methyl (i.e., - CH₃), methylene (i.e., -CH₂-), ethyl, ethylene, formyl (i.e.,-CHO), hexyl, hexamethylene, hydroxymethyl (i.e.,-CH₂OH) mercaptomethyl (i.e., -CH₂SH), methylthio (i.e., -SCH₃), methylthiomethyl (i.e., -CH₂SCH₃), methoxy, methoxycarbonyl (i.e., CH₃OCO-), nitromethyl (i.e., -CH₂NO₂), thiocarbonyl, trimethylsilyl (i.e., (CH₃)₃Si-), t-butyldimethylsilyl, 3-trimethyoxysilypropyl (i.e., (CH₃O)₃SiCH₂CH₂CH₂-), vinyl, vinylidene, and the like. By way of further example, a C₁ - C₁₀ aliphatic radical contains at least one but no more than 10 carbon atoms. A methyl group (i.e., CH₃-) is an example of a C₁ aliphatic radical. A decyl group (i.e., CH₃(CH₂)₉-) is an example of a C₁₀ aliphatic radical.

As used herein the term "cycloaliphatic radical" is intended to designate cyclic alkyl groups having a valence of at least one, and comprising an array of atoms which is cyclic but which is not aromatic. As defined herein a "cycloaliphatic radical" does not contain an aromatic group. A "cycloaliphatic radical" may comprise one or more noncyclic components. For example, a cyclohexylmethyl group (C₆H₁₁CH₂-) is a cycloaliphatic radical which comprises a cyclohexyl ring (the array of atoms which is cyclic but which is not aromatic) and a methylene group (the noncyclic component). The cycloaliphatic radical may include heteroatoms such as nitrogen, sulfur, selenium, silicon and oxygen, or may be composed exclusively of carbon and hydrogen. For convenience, the term "cycloaliphatic radical" is defined herein to encompass a wide range of functional groups such as alkyl groups, alkenyl groups, alkynyl groups, haloalkyl groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylcyclopent-1-yl radical is a C₆ cycloaliphatic radical comprising a methyl group, the methyl group being a functional group which is an alkyl group. Similarly, the 2-nitrocyclobut-1-yl radical is a C₄ cycloaliphatic radical comprising a nitro group, the nitro group being a functional group. A cycloaliphatic radical may comprise one or more halogen atoms which may be the same or different. Halogen atoms include, for example; fluorine, chlorine, bromine, and iodine. Cycloaliphatic radicals comprising one or more halogen atoms include 2-trifluoromethylcyclohex-1-yl, 4-bromodifluoromethylcyclooct-1-yl, 2-chlorodifluoromethylcyclohex-1-yl, hexafluoroisopropylidene-2,2-bis (cyclohex-4-yl) (i.e., -C₆H₁₀C(CF₃)₂ C₆H₁₀-), 2-chloromethylcyclohex-1-yl, 3-difluoromethylenecyclohex-1-yl, 4-trichloromethylcyclohex-1-yloxy, 4-bromodichloromethylcyclohex-1-ylthio, 2-bromoethylcyclopent-1-yl, 2-bromopropylcyclohex-1-yloxy (e.g., CH₃CHBrCH₂C₆H₁₀-), and the like. Further examples of cycloaliphatic radicals include 4-allyloxycyclohex-1-yl, 4-aminocyclohex-1-yl (i.e., H₂NC₆H₁₀-), 4-aminocarbonylcyclopent-1-yl (i.e., NH₂COC₅H₈-), 4-acetyloxycyclohex-1-yl, 2,2-dicyanoisopropylidenebis(cyclohex-4-yloxy) (i.e., -OC₆H₁₀C(CN)₂C₆H₁₀O-), 3-methylcyclohex-1-yl, methylenebis(cyclohex-4-yloxy) (i.e., -OC₆H₁₀CH₂C₆H₁₀O-), 1-ethylcyclobut-1-yl, cyclopropylethenyl, 3-formyl-2-terahydrofuranyl, 2-hexyl-5-tetrahydrofuranyl, hexamethylene-1,6-bis(cyclohex-4-yloxy) (i.e., -0 C₆H₁₀(CH₂)₆C₆H₁₀O-), 4-hydroxymethylcyclohex-1-yl (i.e., 4-HOCH₂C₆H₁₀-), 4-mercaptomethylcyclohex-1-yl (i.e., 4-HSCH₂C₆H₁₀-), 4-methylthiocyclohex-1-yl (i.e., 4-CH₃SC₆H₁₀-), 4-methoxycyclohex-1-yl, 2-methoxycarbonylcyclohex-1-yloxy (2-CH₃OCOC₆H₁₀O-), 4-nitromethylcyclohex-1-yl (i.e., NO₂CH₂C₆H₁₀-), 3-trimethylsilylcyclohex-1-yl, 2-t-butyldimethylsilylcyclopent-1-yl, 4-trimethoxysilylethylcyclohex-1-yl (e.g., (CH₃O)₃SiCH₂CH₂C₆H₁₀-), 4-vinylcyclohexen-1-yl, vinylidenebis(cyclohexyl), and the like. The term "a C₃ - C₁₀ cycloaliphatic radical" includes cycloaliphatic radicals containing at least three but no more than 10 carbon atoms. The cycloaliphatic radical 2-tetrahydrofuranyl (C₄H₇O-) represents a C₄ cycloaliphatic radical. The cyclohexylmethyl radical (C₆H₁₁CH₂-) represents a C₇ cycloaliphatic radical.

The composition provided by the present invention comprises a polyarylate-siloxane copolymer, said copolymer comprising arylate structural units and at least one organosiloxane structural unit, wherein the polyarylate-siloxane copolymer is free of organic carbonate linkages. In one embodiment, the present invention provides a composition comprising organosiloxane structural units and arylate structural units having formula I 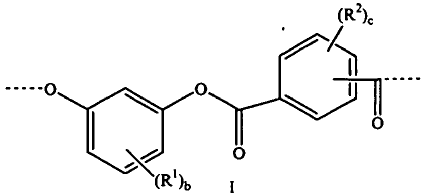 wherein R¹ and R² are independently at each occurrence a halogen atom, a nitro group, a C₁-C₂₀ aliphatic radical, a C₃-C₂₀ cycloaliphatic radical, or a C₃-C₂₀ aromatic radical; and "b" and "c" are independently integers having value 0 to 4; and wherein the polyarylate-siloxane copolymer is free of organic carbonate linkages.

Polymer compositions comprising arylate structural units I and organosiloxane structural units are referred to herein as polyarylate-siloxane copolymers, owing to the presence of a plurality of arylate structural units having formula I, and at least one organosiloxane structural unit as features of the polymer structure. Structure I need not be regarded as the "repeat unit" of the polymer, but rather as a structural unit present anywhere in the polymer. For example, a polymer composition might comprise a plurality of structural units I as part of the polymer chain and yet no two structural units I are adjacent to one another in the polymer chain (i.e. repeat), such as might be the case in a random polyarylate-siloxane copolymer composition comprising structural units derived from resorcinol, terephthahloyl dichloride, isophthaloyl dichloride and eugenol siloxane bisphenol. Alternatively, structure units I may constitute a repeat unit in a polyarylate block in a polyarylate-siloxane copolymer composition which comprises polyarylate blocks.

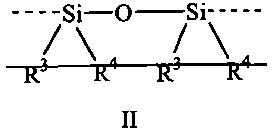

In one embodiment the arylate structural unit of Formula I is derived from at least one dihydroxy aromatic compound and at least one aromatic dicarboxylic acid halide. In one particular embodiment the at least one dihydroxy aromatic compound is a 1,3-dihydroxybenzene compound having Formula (III), commonly referred to throughout this specification as resorcinol or a resorcinol derivative.

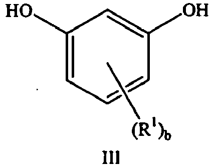

In Formula (III), R¹ is independently at each occurrence a halogen atom, a nitro group, a C₁-C₂₀ aliphatic radical, a C₃-C₂₀ cycloaliphatic radical, or a C₃-C₂₀ aromatic radical; and "b" is an integer having a value 0 to 4. "Resorcinol" or "resorcinol derivative" as used within the context of the present invention should be understood to include both unsubstituted (b = 0) 1,3-dihydroxybenzene and substituted (b is 1 to 4) 1,3-dihydroxybenzenes unless explicitly stated otherwise. Suitable R¹ groups include, but are not limited to methyl, trifluoromethyl, ethyl, n-propyl, isopropyl, butyl, iso-butyl, t-butyl, hexyl, cyclohexyl, nonyl, decyl, and benzyl. In one particular embodiment wherein R¹ is methyl and "b" is 1, the compound of Formula (III) is 2-methyl resorcinol. In another embodiment in which "b" is zero, the resorcinol compound having Formula III, is unsubstituted resorcinol.

Suitable aromatic dicarboxylic acid halides include monocyclic aromatic dicarboxylic acid halides IV 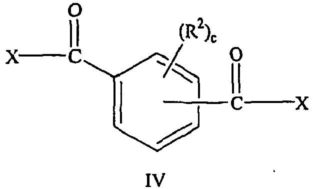 wherein X is halogen, and polycyclic aromatic dicarboxylic acid halides. Generally, dicarboxylic acid chlorides (X = Cl) are preferred owing to their reactivity and ease of manufacture. Exemplary monocyclic aromatic dicarboxylic acid halides include isophthalic acid chloride (also referred to as isophthaloyl chloride and isophthaloyl dichloride), isophthalic acid bromide, terephthalic acid chloride (also referred to as terephthaloyl chloride and terephthaloyl dichloride), terephthalic acid bromide and mixtures of the foregoing monocyclic aromatic dicarboxylic acid halides. Exemplary polycyclic aromatic dicarboxylic acid halides include, but are not limited to, biphenyl-4,4'-dicarboxylic acid chloride; 4,5-chrysene-dicarboxylic acid chloride; dihydro-pyrene-carboxylic acid chloride; phenanthrene 4,5-dicarboxylic acid chloride, naphthalene-1,4-dicarboxylic acid chloride, naphtalne-1,4-dicarboxylic acid bromide; and anthracene-1,5-dicarboxylic acid chloride.

In various embodiments, the polyarylate-siloxane copolymers of the present invention comprise arylate structural units derived from resorcinol (or a resorcinol derivative) and mixtures of isophthalic and terephthalic acid chlorides. In one embodiment, the polyarylate-siloxane copolymer comprises polyarylate blocks derived from an oligomeric diacid chloride having Formula V 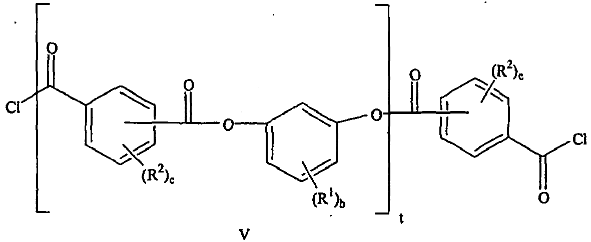 wherein R¹, R², "b" and "c" are defined as in Formula I and "t" is an integer from 1 to about 50. Oligomeric aromatic dicarboxylic acid chlorides can be prepared by reacting a molar excess of at least one aromatic dicarboxylic acid chloride with at least one dihydroxy benzene under interfacial reaction conditions. The term "interfacial reaction conditions" as used herein encompass a variety of ways of making both polyarylate intermediates and product polyarylate-siloxane copolymers. Generally, interfacial conditions are illustrated by reactions in which the reactants are present in a two phase reaction mixture comprising water, a water immiscible solvent such as methylene chloride, a water soluble metal hydroxide (for example an alkali metal hydroxide such as sodium hydroxide), and optionally an organic phase transfer catalyst. Typically, interfacial reaction conditions involve reaction at or near ambient temperature, for example at a temperature in arrange between about 10 and about 60°C, although other temperature ranges are possible. In one embodiment, the oligomeric aromatic dicarboxylic acid chloride represented by structure V is prepared by reacting a molar excess of isophthaloyl dichloride and terephthaloyl dichloride with resorcinol under interfacial reaction conditions. As noted, in various embodiments the arylate component of the polyarylate-siloxane copolymers of the present invention are prepared from a mixture of dicarboxylic acid dichlorides. In one embodiment, a mixture of isophthaloyl and terephthaloyl dichlorides in a molar ratio of isopthaloyl to terephthaloyl of about 0.25-4:1 is used; in another embodiment the molar ratio is about 0.4:2.5:1; and in yet another embodiment the molar ratio is about 0.6-1.5:1.

Typically, the compositions of the present invention comprise at least one polyarylate structural unit derived from resorcinol or a resorcinol derivative having Formula III and structural units derived from a mixture of iso- and terephthaloyl acid dichlorides, said polyarylate structural unit being at times referred to herein are also referred to as the "ITR" or the "ITR block". With reference to the term "ITR", the letter "I" refers to isophthaloyl groups, the letter "T" terephthaloyl groups, and the letter "R" groups derived from resorcinol or a derivative of resorcinol. Therefore in one embodiment, the present invention provides a polymeric composition comprising an ITR block comprising structural units represented by Formula VI 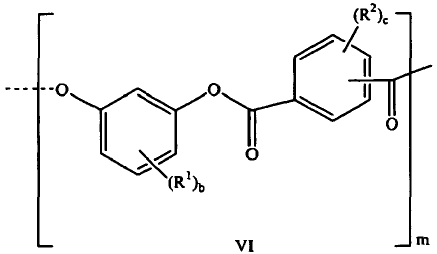 wherein the brackets indicate (as those skilled in the art will appreciate) that the structure VI is a repeat unit of a polyarylate block having a block-length of "m", and wherein R¹, R², "b" and "c" are defined as in Formula I, and wherein "m" is a number from about 2 to about 100.

The organosiloxane structural units of the polyarylate-siloxane copolymer of the present invention are derived from at least one hydroxy organosiloxane compound (also referred to as organosiloxane diols in the case in which no R³ or R⁴ group is a hydroxyl group) having Formula VII 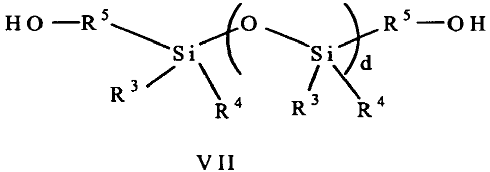 wherein R³ and R⁴ are independently at each occurrence a hydrogen atom, a hydroxyl group, a C₁-C₂₀ aliphatic radical, a C₃-C₂₀ cycloaliphatic radical, a C₃-C₂₀ aromatic radical, or R³ and R⁴ may together form a silicon-containing C₃-C₂₀ cycloaliphatic radical or a silicon-containing C₃-C₂₀ aromatic radical. While either or both of R³ and

R⁴ may comprise a hydroxy group (for example R³ is a hydroxymethylene group (CH₂OH), not both of R³ and R⁴ may be a hydroxyl group (OH group) when attached to the same silicon atom. R⁵ is a C₃-C₂₀ aromatic radical; and "d" is an integer having a value from 1 to about 500. In one embodiment at least one of R³ or R⁴ is selected from the group consisting of, a cyano group and a hydrogen atom. In one embodiment "d" is an integer having a value from about 1 to about 400. In one particular embodiment "d" is an integer having a value from about 1 to about 99. In another embodiment "d" is an integer having a value from about 1 to about 50. In yet another particular embodiment "d" is an integer having a value from about 1 to about 10.

In one embodiment, the hydroxy organosiloxane compound of Formula VII is selected from the group consisting of eugenol siloxane bisphenol having Formula IX, 4-allyl-2-methylphenol siloxane bisphenol having Formula X, 4-allylphenol siloxane bisphenol having Formula XI, 2-allylphenol siloxane bisphenol having Formula XII, and 4-vinylphenol siloxane bisphenol having Formula XIV. In the foregoing description, the siloxane diols IX-XIV are referred to as "bisphenols" because each of said siloxane diols comprises two aromatic hydroxyl groups. In addition, the naming convention employed names the siloxane diols IX-XIV after the corresponding unsaturated phenol from which siloxane diols IX-XIV they may be prepared. For example, eugenol siloxane bisphenol IX may be prepared via hydrosilylation of eugenol (4-allyl-2-methoxyphenol) with a disilane having the formula HSi(CH₃)₂(OSi(CH₃)₂)_{d}H in the presence of a suitable catalyst, for example Karstedt's catalyst.

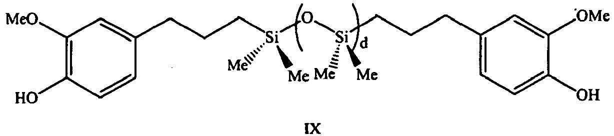

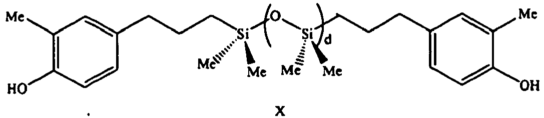

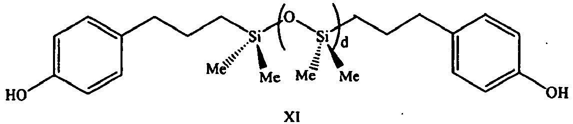

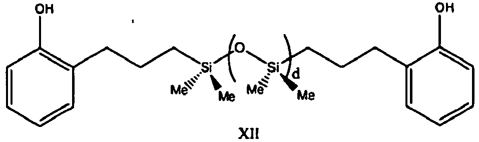

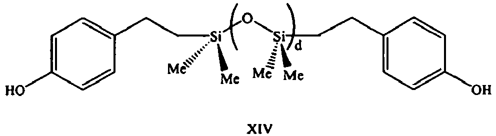

In formulas IX, X, XI, XII, and XIV, "d" is an integer having a value from 1 to about 500. In one particular emobdiment, the composition comprises structural units derived from eugenol siloxane bisphenol having Formula IX.

In one embodiment, the polyarylate-siloxane copolymer may further comprise a soft block comprising structural units of formula XVI or formula XVII 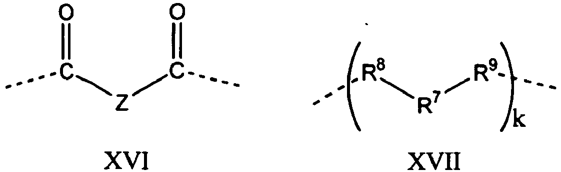 wherein Z is a C₃-C₂₀₀ aliphatic radical; R⁷ is a bond, a C₁-C₂₀ aliphatic radical, a C₃-C₄₀ cycloaliphatic radical, or a C₃-C₄₀ aromatic radical, and R⁸ and R⁹ each independently represent a bond or any one of the groups selected from 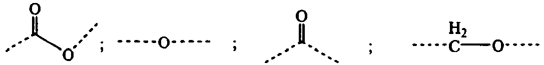 and "k" is an integer having a value from 1 to about 100. Specific embodiments of formula XVI are illustrated by the groups ----CO(CH₂)₄CO----, ----CO(CH₂)₆CO----, and ----CO(CH₂)₁₀CO---- which represent, in one embodiment structural units derived from at least one of the corresponding diacid, diacid halide, or diester. For example the structural group ----CO(CH₂)₁₀CO---- is in one embodiment derived from dodecanedioic acid diacid chloride. Specific embodiments of formula XVI include structural units derived from polyethylene glycol, polypropylene glycol, and the like, wherein Z represents an aliphatic radical which is a polyoxyalkylene radical.

In certain embodiments structural units derived from one or more aliphatic diols may also be present in the polyarylate-siloxane copolymer. Suitable aliphatic diols include 1,6-hexanediol, ethylene glycol, diethylene glycol, dipropylene glycol, propylene glycol, 1,2-butane diol, 1,3-butane diol, 1,4-butanediol, 2,2-bis(hydroxymethyl) propionic acid, polycaprolactone diol, neopentyl glycol, mixtures of said diols, and the like. Aliphatic diols may be used to modify the material properties (e.g. control melt viscosity and Tg) of the product polyarylate polyarylate-siloxane copolymer. In one embodiment, the product polyarylate polyarylate-siloxane copolymer comprises structural units derived from one or more aliphatic diols, said structural units being present in an amount corresponding to from about 0.01 percent by weight to about 90 percent by weight based on the total weight of the product polyarylate-siloxane copolymer. In another embodiment, the product polyarylate-siloxane copolymer comprises structural units derived from one or more aliphatic diols, said structural units being present in an amount corresponding to from about 0.1 percent by weight to about 25 percent by weight based on the total weight of the product polyarylate-siloxane copolymer. In yet another embodiment, the product polyarylate-siloxane copolymer comprises structural units derived from one or more aliphatic diols, said structural units being present in an amount corresponding to from about 1 percent by weight to about 2 percent by weight based on the total weight of the product polyarylate-siloxane copolymer. In one embodiment, the polyarylate-siloxane copolymers provided by the present invention comprise structural units having Formula XVIII. 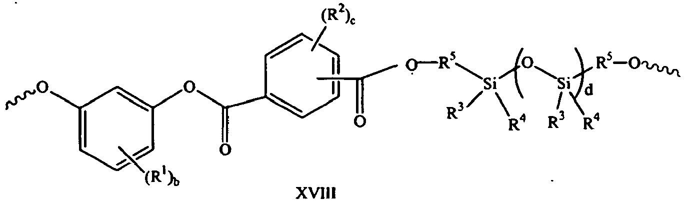 wherein R¹ and R² are independently at each occurrence a halogen atom, a nitro group, a C₁-C₂₀ aliphatic radical, a C₃-C₂₀ cycloaliphatic radical, or a C₃-C₂₀ aromatic radical; "b" and "c" are independently integers having a value 0 to 4; R³ and R⁴ are independently at each occurrence a hydrogen atom, a hydroxyl group, a C₁-C₂₀ aliphatic radical, a C₃-C₂₀ cycloaliphatic radical, a C₃-C₂₀ aromatic radical, or R³ and R⁴ may together form a silicon-containing C₃-C₂₀ cycloaliphatic radical or a C₃-C₂₀ aromatic radical; R⁵ is a C₁-C₂₀ aliphatic radical, a C₃-C₂₀ cycloaliphatic radical or a C₃-C₂₀ aromatic radical; and "d" is an integer having a value from 1 to about 500.

In one particular embodiment the polyarylate-siloxane copolymer comprises structural units represented by Formula XX, 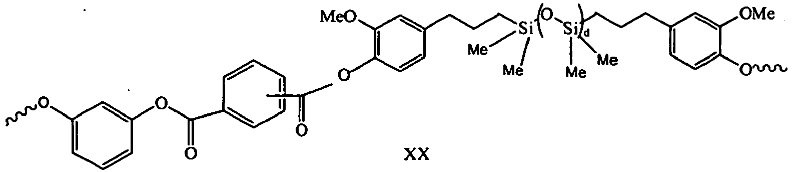 wherein "d" is an integer having a value 1 to about 500. It will be understood by hose skilled in the art that the wavy lines shown in structure XX and disclosed elsewhere herein, see for example structures XVIII and XIX, represent other parts of the polyarylate-siloxane copolymer structure.

In one embodiment, the product polyarylate-siloxane copolymer comprises organosiloxane structural in an amount corresponding to from about 1 to about 50 percent by weight of the total weight of the composition. In another embodiment, the product polyarylate-siloxane copolymer comprises organosiloxane structural units in an amount corresponding to from about 1 to about 30 percent by weight of the total weight of the composition. In one particular embodiment organosiloxane structural units are present in an amount corresponding to from about 1 to about 10 percent by weight of the total weight of the polyarylate-siloxane copolymer.

In one embodiment, the product polyarylate-siloxane copolymer has a glass transition temperature (Tg) greater than 50°C. In another embodiment the Tg of the polyarylate-siloxane copolymer is greater than 100°C. In one particular embodiment the Tg of the polyarylate-siloxane copolymer is greater than 120°C. In certain embodiments, the polyarylate-siloxane copolymer may possess multiple glass transitions, as for example when the polyarylate-siloxane copolymer possesses phase separated polyarylate-rich domains and organosiloxane-rich domains, wherein each of the two domains has an observable and different glass transition temperature.

In yet another embodiment, the polyarylate-siloxane copolymer has a weight average molecular weight, Mw, in a range of from about 1000 to about 100,000 grams per mole. In yet still another embodiment, the polyarylate-siloxane copolymer has a weight average molecular weight, Mw, in arrange of from about 2000 to about 10,000 grams per mole.

As noted, and as will be illustrated by the experimental examples presented herein, the polyarylate-siloxane copolymers of the present invention may be prepared by the copolymerisation of a mixture comprising at least one resorcinol compound, at least one diacid halide, and at least one hydroxy organosiloxane compound. In one embodiment the polymerization reaction is carried out under interfacial conditions in the presence of at least one catalyst, water, and at least one substantially water-immiscible organic solvent. Typically, an inorganic base, for example an alkali metal hydroxide or an alkaline earth metal hydroxide is present. In one embodiment, at least a stoichiometric amount of sodium hydroxide is employed in the polymerization reaction carried out under interfacial conditions.

Suitable catalysts comprise tertiary amines, quaternary ammonium salts, quaternary phosphonium salts, hexaalkylguanidinium salts, and mixtures thereof. Suitable tertiary amines include triethylamine, dimethylbutylamine, diisopropylethylamine, 2,2,6,6-tetramethylpiperidine, and mixtures thereof. Other contemplated tertiary amines include N-C₁-C₆-alkyl-pyrrolidines, such as N-ethylpyrrolidine, N-C₁-C₆-alkyl-piperidines, such as N-ethylpiperidine, N-methylpiperidine, and N-isopropylpiperidine, N-C₁-C₆-alkyl-morpholines, such as N-ethylmorpholine and N-isopropyl-morpholine, N-C₁-C₆-alkyl-dihydroindoles, N-C₁-C₆-alkyl-dihydroisoindoles, N-C₁-C₆-alkyl-tetrahydroquinolines, N-C₁-C₆-alkyl-tetrahydroisoquinolines, N-C₁-C₆-alkyl-benzomorpholines, 1-azabicyclo-[3.3.0]-octane, quinuclidine, N-C₁-C₆-alkyl-2-azabicyclo-[2.2.1]-octanes, N-C₁-C₆-alkyl-2-azabicyclo-[3.3.1]-nonanes, and N-C₁-C₆-alkyl-3-azabicyclo-[3.3.1]-nonanes, N,N,N',N'-tetraalkylalkylene-diamines, including N,N,N',N'-tetraethyl-1,6-hexanediamine. In various embodiments tertiary amines are triethylamine and N-ethylpiperidine. Also included are 4-dimethylaminopyridine, 4-pyrrolidino pyridine and other 4-dialkylaminopyridines.

Suitable quaternary ammonium salts include halide salts such as tetraethylammonium bromide, tetraethylammonium chloride, tetrapropylammonium bromide, tetrapropylammonium chloride, tetrabutylammonium bromide, tetrabutylammonium chloride, methyltributylammonium chloride, benzyltributylammonium chloride, benzyltriethylammonium chloride, benzyltrimethylammonium chloride, trioctylmethylammonium chloride, cetyldimethylbenzylammonium chloride, octyltriethylammonium bromide, decyltriethylammonium bromide, lauryltriethylammonium bromide, cetyltrimethylammonium bromide, cetyltriethylammonium bromide, N-laurylpyridinium chloride, N-laurylpyridinium bromide, N-heptylpyridinium bromide, tricaprylyhnethylammonium chloride (sometimes known as ALIQUAT 336), methyltri-C₈ -C₁₀ -alkyl-ammonium chloride (sometimes known as ADOGEN 464), and N,N,N',N',N'-pentaalkyl-alpha, omega-amine-ammonium salts such as disclosed in U.S. Pat. No. 5,821,322. Suitable , quaternary phosphonium salts are illustrated by tetrabutylphosphonium bromide, benzyltriphenylphosphonium chloride, triethyloctadecylphosphonium bromide, tetraphenylphosphonium bromide, triphenylmethylphosphonium bromide, trioctylethylphosphonium bromide, and cetyltriethylphosphonium bromide. Suitable hexaalkylguanidinium salts are illustrated by the hexaalkylguanidinium halides, hexaethylguanidinium chloride, hexaethylguanidinium bromide, hexaethylguanidinium fluoride, hexapropylguanidinium chloride, and the like, and mixtures thereof. While only species comprising halide anions as counterions are expressly mentioned in the foregoing listing of suitable catalysts, almost any anionic species may serve as the counterion in catalyst systems useful in the preparation of the polyarylate-siloxane copolymers of the present invention. For example, quaternary ammonium hydroxides, quaternary phosphonium hydroxides, and hexaalkylguanidinium hydroxides may be employed. In one embodiment, the catalyst is methyl tributyl ammonium hydroxide.

In one embodiment the amount of catalyst present may be about 0.1 to 10 mole percent based on the total molar amount of acid chloride groups. In another embodiment the amount of catalyst present may be about 0.2 to 6 mole percent based on the total molar amount of acid chloride groups. In yet another embodiment the amount of catalyst present may be about 1 to 4 mole percent based on the total molar amount of acid chloride groups. In one particular embodiment the amount of catalyst present may be about 2.5 to 4 mole percent based on the total molar amount of acid chloride groups.

Typically, the organic solvent employed is substantially immiscible with water. By substantially immiscible it is meant that in a two-phase solvent-water mixture comprising a water-rich aqueous layer and a solvent rich organic layer, the water-rich aqueous layer will comprise less than about 5 weight (wt.) percent solvent, and in another embodiment less than about 2 wt. percent solvent. Suitable organic solvents include dichloromethane, trichloroethylene, tetrachloroethane, chloroform, 1,2-dichloroethane, toluene, xylene, trimethylbenzene, chlorobenzene, o-dichlorobenzene, and mixtures thereof. In a particular embodiment the solvent is dichloromethane.

The temperature of the polymerization reaction mixture may be any convenient temperature that provides a useful reaction rate. Convenient temperatures include those from about -20°C to the boiling point of the water and water-immiscible organic solvent mixture under the reaction conditions. In one embodiment the reaction is performed at the boiling point of the organic solvent in the water-organic solvent mixture. In another embodiment the reaction is performed at the boiling point of dichloromethane.

In one embodiment, at least one chain-stopper (also referred to sometimes hereinafter as a capping agent) may be present in the polymerization mixture. In one embodiment, a chain-stopper is added in order to control the molecular weight of the product polyarylate-siloxane copolymer, thus providing a polyarylate-siloxane copolymer with controlled molecular weight and favorable processability. A chain-stopper is typically a monofunctional reactant and in one embodiment is selected from the group consisting of mono-phenolic compounds (e.g. phenol), and mono-carboxylic acid chlorides (e.g. benzoyl chloride).

For example, mono-phenolic compounds suitable as chain stoppers include monocyclic phenols, such as phenol, C₁-C₂₂ alkyl-substituted phenols, p-cumyl-phenol, p-tertiary-butyl phenol, hydroxy diphenyl; and monoethers of diphenols, such as p-methoxyphenol. In some embodiments a mono-phenolic UV absorber is used as capping agent. Such mono-phenolic UV absorbers include, 4-substituted-2-hydroxybenzophenones and their derivatives, aryl salicylates, monoesters of diphenols, such as resorcinol monobenzoate, 2-(2-hydroxyaryl)-benzotriazoles and their derivatives, 2-(2-hydroxyaryl)-1,3,5-triazines and their derivatives, and like compounds. In one embodiment the mono-phenolic chain-stopper is selected from the group consisting of phenol, p-cumylphenol, and resorcinol monobenzoate.

Mono-carboxylic acid chlorides suitable as chain stoppers include monocyclic, mono-carboxylic acid chlorides, such as benzoyl chloride, C₁ -C₂₂ alkyl-substituted benzoyl chloride, toluoyl chloride, halogen-substituted benzoyl chloride, bromobenzoyl chloride, cinnamoyl chloride, 4-nadimidobenzoyl chloride, and mixtures thereof, polycyclic, mono-carboxylic acid chlorides, such as trimellitic anhydride chloride, and naphthoyl chloride; and mixtures of monocyclic and polycyclic mono-carboxylic acid chlorides. The chlorides of aliphatic monocarboxylic acids with up to 22 carbon atoms are also suitable. Functionalized chlorides of aliphatic monocarboxylic acids, such as acryloyl chloride and methacryoyl chloride, are also suitable.

In another embodiment, at least one branching agent such as a trifunctional or higher functional acid chloride and/or a trifunctional or higher functional phenol may be included during the polymerization reaction. Such branching agents, if included, are typically be used in quantities of 0.005 to 1 mole percent, based on aromatic dicarboxylic acid halide or resorcinol compounds used. Suitable branching agents include, for example, trifunctional or higher acid chlorides, such as trimesic acid trichloride, cyanuric acid trichloride, 3,3',4,4'-benzophenone tetracarboxylic acid tetrachloride, 1,4,5,8-naphthalene tetracarboxylic acid tetrachloride or pyromellitic acid tetrachloride, and trifunctional or higher phenols, such as phloroglucinol, 4,6-dimethyl-2,4,6-tri-(4-hydroxyphenyl)-2-heptene, 4,6-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenyl methane, 2,2-bis-[4,4-bis-(4-hydroxyphenyl)-cyclohexyl]-propane, 2,4-bis-(4-hydroxyphenylisopropyl)-phenol, tetra-(4-hydroxyphenyl)-methane, 2,6-bis-(2-hydroxy-5-methylbenzyl)-4-methyl phenol, 2-(4-hydroxyphenyl)-2-(2,4-dihydroxyphenyl)-propane, tetra-(4-[4-hydroxyphenylisopropyl]-phenoxy)-methane, 1,4-bis-[(4,4-dihydroxytriphenyl)methyl]-benzene.

In one embodiment, the present invention provides a blend composition comprising a polyarylate-siloxane copolymer and at least one other polymer, for example a polycarbonate (hereinafter sometimes designated "PC"), a polyester, a copolyestercarbonate, a polyarylate, a polyetherimide, a polyphenylene ether, or an olefin polymer.

In one embodiment, the present invention provides a blend composition comprising bisphenol A polycarbonate. In an alternate embodiment, the present invention provides a blend composition comprising at least one copolycarbonate. In one embodiment, the weight average molecular weight of the polycarbonate ranges from about 5,000 to about 100,000 grams per mole. In another embodiment, the weight average molecular weight of the polycarbonate ranges from about 25,000 to about 65,000 grams per mole. It should be emphasized here that although the blend composition provided by the present invention may comprise a polycarbonate and therefore organic carbonate linkages, the polyarylate-siloxane copolymer component of the blend is itself free of organic carbonate linkages.

As noted, in one aspect the present invention provides a blend of a polyarylate-siloxane copolymer and at least one polyester. Suitable polyesters are illustrated by poly(alkylene dicarboxylates), especially poly(ethylene terephthalate) (hereinafter sometimes designated "PET"), poly(1,4-butylene terephthalate) (hereinafter sometimes designated "PBT"), poly(trimethylene terephthalate) (hereinafter sometimes designated "PTT"), poly(ethylene naphthalate) (hereinafter sometimes designated "PEN"), poly(butylene naphthalate) (hereinafter sometimes designated "PBN"), poly(cyclohexanedimethanol terephthalate), poly(cyclohexanedimethanol-co-ethylene terephthalate) (hereinafter sometimes designated "PETG"), and poly(1,4-cyclohexanedimethyl-1,4-cyclohexanedicarboxylate) (hereinafter sometimes designated "PCCD"), and especially poly(alkylene arenedioates), with poly(ethylene terephthalate) and poly(1,4-butylene terephthalate) being preferred in some embodiments.

The compositions of the present invention may contain art-recognized additives including, but not limited to, colorants, pigments, dyes, impact modifiers, stabilizers, color stabilizers, heat stabilizers, UV screeners, UV absorbers, flame retardants, fillers, flow aids, ester interchange inhibitors, and mold release agents.

### EXAMPLES

Acid chlorides employed in the reaction were purchased from Twin Lakes Chemical, Inc, Lockport, NY. Resorcinol was purchased from Sumitomo. Triethylamine and solvents were purchased from Fisher Scientific. Hydroxy-terminated polydimethylsiloxane and 2,2-bis-(hydroxymethyl)propionic acid were purchased from Aldrich. Polycaprolactonediol, CAPA^{®} 2054, was purchased from Solvay. All the reactants / reagents were used as purchased.

Molecular weights were determined by GPC, using polystyrene standards. Glass transition temperatures (Tg) were measured by DSC calibrated to an indium standard.

### Example 1: This example provides a polyarylate-siloxane copolymer comprising ITR blocks and structural units derived from eugenol siloxane bisphenol.

A solution of resorcinol (17.6 grams (g); 160 millimoles (mmole)) and NaOH (29.1 g 364 mmole); 50% by weight solution), in 50 milliliters (ml) of deionized water was added using an addition funnel over a period of about 10 min to a solution of isophthaloyl chloride (20.3 g; 100 mmole), terephthaloyl chloride (20.3 g; 100 mmole), eugenol siloxane bisphenol (also referred to as -eugenol-terminated tetramethyldisiloxane) (6.51 g; 21.8 mmole) , and triethylamine (2.53 ml; 18.2 mmole) in 350 ml of dichloromethane. After about 20 minutes of stirring at room temperature (25°C) under N₂ atmosphere, 200 ml of water were added and the stirring was continued for about 5 additional minutes. The phases were separated and the organic phase was recharged to the reactor. Another 200 ml of water and triethylamine (253 ml; 182 mmole) were added and the reaction was stirred for about 30 minutes. The phases were separated and the organic phase was washed with 150 ml of 0.5 M sulfuric acid. The phases were again separated and the solvent evaporated from the organic phase. The remaining residue was dried in a vacuum oven at 40 °C for 24 h. This yielded 35.4 g of a white solid with a weight average molecular weight (Mw) = 6558 grams per mole, a number average molecular weight (Mn) = 2748 grams per mole, and glass transition temperature (Tg) of 105 °C.

### Example 2 : This example provides a polyarylate-siloxane copolymer comprising ITR blocks and structural units derived from a eugenol siloxane bisphenol.

A solution of resorcinol (17.6 g; 160 mmole)) and NaOH (29.1 g; 364 mmole); 50% by weight solution), in 50 ml of deionized water was added using an addition funnel over 10 minutes, to a solution of isophthaloyl chloride (20.3 g; 100 mmole), terephthaloyl chloride (20.3 g; 100 mmole), eugenol-terminated polydimethylsiloxane (Mn = 720; 15.7 g; 21.8 mmole), and 2.53 ml triethylamine (2.53 ml; 18.2 mmole) in 350 ml of dichloromethane. After 20 minutes of stirring at room temperature under nitrogen atmosphere, 200 ml of water were added and stirring was continued for about 5 additional minutes. The phases were then separated and the organic phase was recharged to the reactor. Another 200 ml of water and 25.3 ml of triethylamine (253 ml; 182 mmole) were added and the reaction was stirred for about 30 minutes. The phases were separated and the organic phase was washed with 150 ml of 0.5 M sulfuric acid. The organic phase was then subjected to solvent removal. The remaining residue was dried in a vacuum oven at 40 °C for about 24 h. This yielded 55 g of a white solid with Mw = 7176, Mn = 2739, and Tg = 82 °C.

### Example 3 : This example provides a polyarylate-siloxane copolymer comprising ITR structural units and structural units derived from 2,2-bis(hydroxymethyl)propionic acid, polycaprolactone diol, and eugenol siloxane bisphenol.

A solution of resorcinol (17.5 g; 159 mmole), 2,2-bis(hydroxymethyl)-propionic acid ((DMPA); 1.29 g; 9.56 mmole), and sodium hydroxide (30.7 g ; 383 mmole; 50% by weight solution), in 50 ml of deionized water was added using an addition funnel over 10 min to a solution of isophthaloyl chloride (21.4 g; 105 mmole), terephthaloyl chloride (21.4 g; 105 mmole), polycaprolactone diol (PCLD, having number average molecular weight ((Mn) = 530 grams per mole; 11.2 g; 21.1), eugenol-terminated polydimethylsiloxane (Mn = 1130 grams per mole; 2.97 g; 1.92 mmole), and triethylamine (2.67 ml; 19.2 mmole) in 350 ml of dichloromethane. After stirring for about 20 minutes at room temperature (25°C) under nitrogen atmosphere, 200 ml of water were added and the stirring was continued for an additional 5 minutes. The phases were separated and the organic phase was recharged into the reactor. Another 200 ml of water and of triethylamine (26.7 ml; 192 mmole) were added and the reaction was stirred for about 30 minutes. The phases were separated and the organic phase was washed with 150 ml of 0.5 M sulfuric acid. The organic phase was then subjected to solvent removal. The remaining residue was dried in a vacuum oven at 40 °C for about 24 hours. This yielded 42.8 g of a white solid with Mw = 5604 grams per mole, Mn = 2541 grams per mole, and Tg = 54 °C.

### Example 4 : This example provides a polyarylate-siloxane copolymer comprising ITR structural units and structural units derived from a hydroxy-terminated polydimethylsiloxane.

To a solution of isophthaloyl chloride (8.65 g, 42.6 mmole) and terephthaloyl chloride (8.65 g; 42.6 mmole) in 100 ml of dichloromethane was added triethylamine (1.19 ml; 8.50 mmole) and 0.15 ml deionized water. The reaction was stirred for about 20 minutes. A solution of hydroxy-terminated polydimethylsiloxane (6.34 g; 11.5 mmole) and triethylamine (3.56 ml; 30 mmole) in 40 ml of dichloromethane was added using an addition funnel over 5 min and stirred for 20 minutes. A solution of resorcinol (7.17 g; 65.2 mmole), and triethylamine (20.0 ml; 143 mmole) in 100 ml of dichloromethane was then added using an addition funnel over about 20 minutes. After stirring at room temperature under nitrogen atmosphere for 2 h, 100 ml of water was added and the mixture was stirred for an additional 20 minutes. The reaction mixture was acidified with 2 M hydrochloric acid until the pH of the aqueous phase was less than 2. The phases were separated and the organic phase was washed twice with deionized water. The organic phase was added into 600 ml methanol resulting in the formation of a precipitate. The precipitate was filtered and dried in a vacuum oven at 40°C for about 24 hours to give 12.5 g of a white solid with Mw = 5766 grams per mole, Mn = 2096 grams per mole, and Tg = 116 °C.

### Example 5 : This example provides a polyarylate-siloxane comprising ITR blocks, structural units derived from neopenty glycol, and structural units derived from an aminopropyl-terminated siloxane.

To a solution of isophthaloyl chloride (15.0 g; 73.8 mmole), 200 ml methylene chloride, resorcinol (2.1 g; 19.1 mmole), and neopentyl glycol (4.6 g; 44.2 mmole) was added via an addition funnel a solution of triethylamine (13.4 g; 112.9 mmole), aminopropyl-terminated polydimethylsiloxane (equiv wt approx. 490; 2.8 g; 2.9 mmole), 20 mL dichloromethane and dimethylaminopyridine (0.2 g; 1.64 mmole). The rate of addition was maintained to maintain a gentle reflux. After the addition was completed the reaction mixture was stirred over night at room temperature (25°C). The reaction mixture was then filtered and combined with 100 mL deionized water and triethylamine (6 ml; 50.6 mmole) and vigorously stirred for about one hour. The organic phase was then treated with 100ml of dilute sulfuric acid. The phases were separated and the organic phase was washed twice with deionized water. The solvent was then removed under reduced pressure to yield 18.4 g of the product polyarylate-siloxane copolymer as a light yellow solid. This material had an Mw of 6281 grams per mole, a Mn of 2843 grams per mole, and a Tg of 64°C.

### Example 6 : This example provides a polyarylate-siloxane copolymer comprising ITR blocks and structural units derived from a hydroxybutoxyethyl terminated siloxane, and structural units derived from neopentyl glycol.

Isophthaloyl chloride (20.0 g; 98.49 mmole), 130 ml methylene chloride, hydroxybutoxyethyl terminated polydimethylsiloxane (hydroxyl equivalent. weight 1036; 4.0 g; 1.93 mmole), resorcinol (4.8 g; 43.6 mmole), and neopentyl glycol (4.5 g; 44.16 mmole) was charged to a reaction flask. Dimethylaminopyridine (0.4 g; 3.2 mmole) was added to the reaction flask followed by the dropwise addition of triethylamine (24.5 ml; 206.5 mmole). Again an exotherm was noted upon the addition of the amine. After the addition of the triethylamine was complete the reaction mixture was allowed to stir at room temperature for about 24 hours. The reaction mixture was then filtered, and then treated with 100ml water and triethylamine (9 ml; 81.67 mmole)), and worked-up as described in example 5 above. The solvent was then removed under reduced pressure to yield 25.2 g of the product polyarylate-siloxane copolymer as a light yellow solid. This material had a Mw of 6617 grams per mole, a Mn of 3471 grams per mole, and a Tg of 76°C.

## Claims

1. A composition comprising a polyarylate-siloxane copolymer, said copolymer comprising
(i) arylate structural units having Formula I 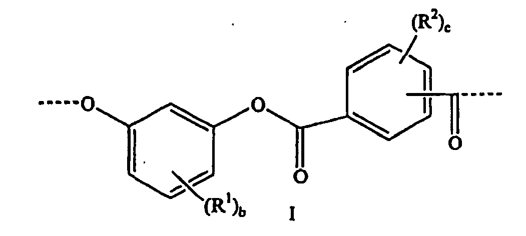 wherein
R¹ and R² are independently at each occurrence a halogen atom, a nitro group, a C₁ to C₂₀ aliphatic radical, a C₃ to C₂₀ cycloaliphatic radical, or a C₃ to C₂₀ aromatic radical,
b and c are independently integers having a value 0 to 4; and
(ii) at least one organosiloxane structural unit derived from at least one hydroxy organosiloxane compound of Formula VII 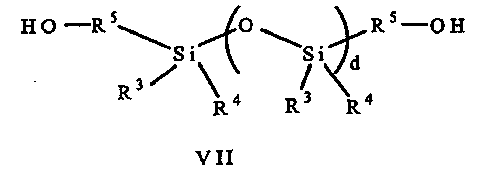 wherein
R³ and R⁴ are independently at each occurrence a hydrogen atom, a hydroxyl group, a C₁ to C₂₀ aliphatic radical, a C₃ to C₂₀ cycloaliphatic radical, a C₃ to C₂₀ aromatic radical, or R³ and R⁴ may together form a silicon-containing C₃ to C₂₀ cycloaliphatic radical or a C₃ to C₂₀ aromatic radical;
R⁵ is a C₃ to C₂₀ aromatic radical, and
d is an integer from 1 to 500;
wherein said polyarylate-siloxane copolymer is free of organic carbonate linkages.

2. The composition according to claim 1, wherein at least one of R³ and R⁴ is selected from the group consisting of a cyano group, and a hydrogen atom.

3. The composition according to claim 1, wherein the arylate structural units having Formula I 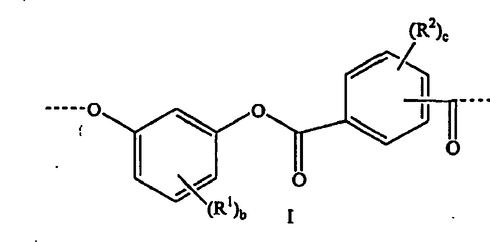 comprise structural units derived from at least one dihydroxy-substituted aromatic compound and structural units derived from at least one aromatic dicarboxylic acid halide.

4. The composition according to claim 3,
(i) wherein the at least one dihydroxy aromatic compound is a 1,3-dihydroxybenzene (III) 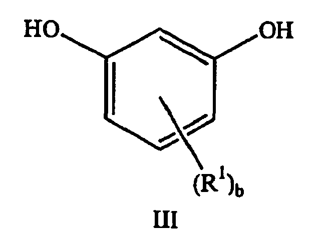 wherein R¹ is independently at each occurrence a halogen atom, a nitro group, a C₁ to C₂₀ aliphatic radical, a C₃ to C₂₀ cycloaliphatic radical, or a C₃ to C₂₀ aromatic radical; and b is an integer from 0 to 4; or
(ii) wherein the at least one dihydroxy aromatic compound is resorcinol; or
(iii) wherein the at least one aromatic dicarboxylic acid halide comprises a mixture of isophthalic and terephthalic acid halides having Formula (IV) 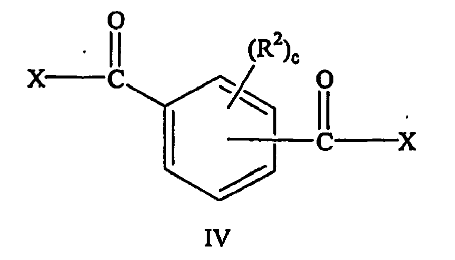 wherein R² is independently at each occurrence a halogen atom, a nitro group, a C₁ to C₂₀ aliphatic radical, a C₃ to C₂₀ cycloaliphatic radical, or a C₃ to C₂₀ aromatic radical; c is an integer from 0 to 4; and X is halogen.

5. The composition according to claim 1, wherein the polyarylate-siloxane copolymer comprises at least one polyarylate block having Formula VI 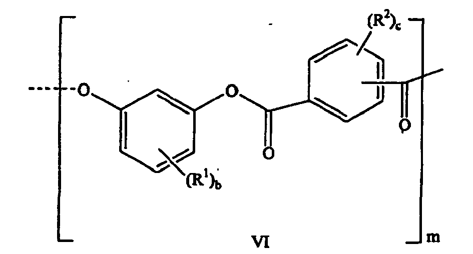 wherein R¹ and R² are independently at each occurrence a halogen atom, a nitro group, a C₁ to C₂₀ aliphatic radical, a C₃ to C₂₀ cycloaliphatic radical, or a C₃ to C₂₀ aromatic radical; b and c are independently integers from 0 to 4; and m is an integer from 2 to 100.

6. The composition according to claim 1, wherein R⁵ is a C₆ to C₁₀ aromatic radical.

7. The composition according to claim 1, wherein said hydroxy organosiloxane compound VII comprises at least one bisphenol selected from the group consisting of eugenol siloxane bisphenol IX, 4-allyl-2-methylphenol siloxane bisphenol X, 4-allylphenol siloxane bisphenol XI, 2-allylphenol siloxane bisphenol XII, and 4-vinylphenol siloxane bisphenol XIV 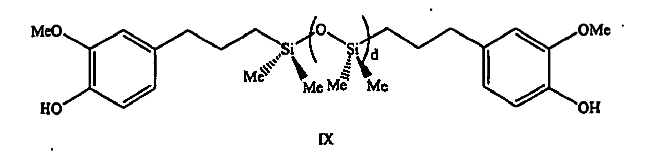 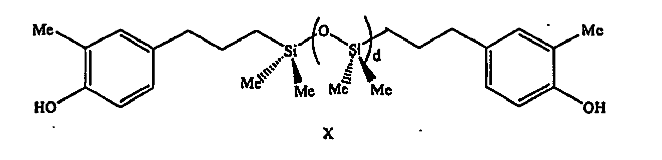 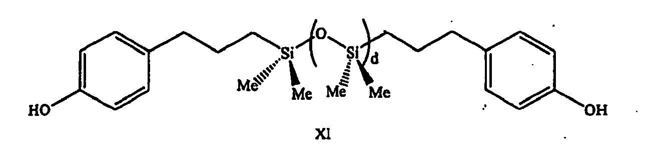 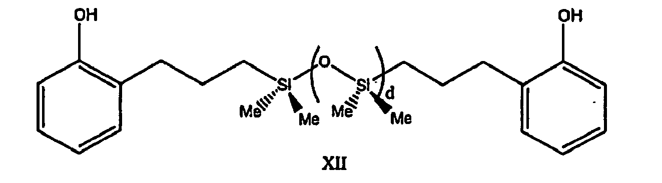 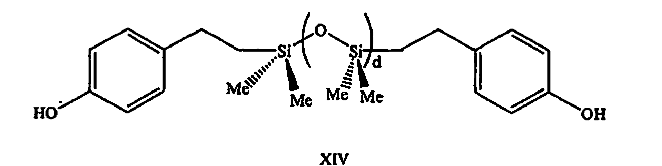 wherein in formulas IX, X, XI, XII, and XIV, d is an integer having a value from 1 to 500.

8. The composition according to claim 1, wherein said organosiloxane structural units are present in an amount corresponding to from 1 to 50 percent by weight of the total weight of the composition.

9. The composition according to claim 1, further comprising at least one soft block structural unit XVI 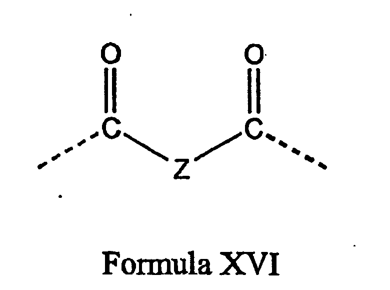 wherein Z is a C₃ to C₂₀₀ aliphatic radical.

10. The compostion of claim 9, wherein the soft block structural unit is selected from the group consisting of -CO(CH₂)₄CO-, -CO(CH₂)₆CO- and - CO(CH₂)₁₀CO-.

11. The compostion of claim 1 further comprising structural units derived from at least one aliphatic diol, wherein the aliphatic diol is selected from the group consisting of 1,6-hexanediol, ethylene glycol, di-ethylene glycol, dipropylene glycol, propylene glycol, 1,2-butane diol, 1,3-butane diol, 1,4-butanediol, 2,2-bis(hydroxymethyl) propionic acid, neopentyl glycol, and polycaprolactone diol.

12. The composition of claim 1 wherein said polyarylate-siloxane copolymer comprises strucural units XVIII 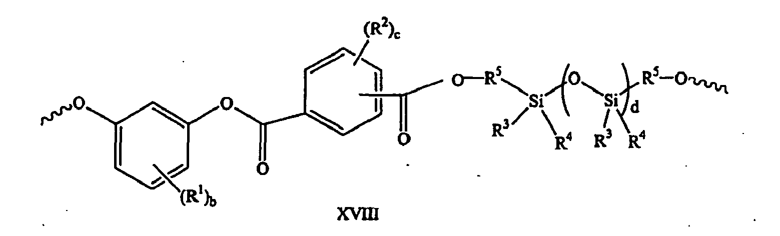 wherein
R¹ and R² are independently at each occurrence a halogen atom, a nitro group, a C₁ to C₂₀ aliphatic radical, a C₃ to C₂₀ cycloaliphatic radical, or a C₃ to C₂₀ aromatic radical;
b and c are independently integers having a value 0 to 4;
R³ and R⁴ are independently at each occurrence a hydrogen atom, a hydroxyl group, a C₁ to C₂₀ aliphatic radical, a C₃ to C₂₀ cycloaliphatic radical, a C₃ to C₂₀ aromatic radical, or R³ and R⁴ may together form a silicon-containing C₃ to C₂₀ cycloaliphatic radical or a C₃ to C₂₀ aromatic radical;
R⁵ is a C₁ to C₂₀ aliphatic radical, a C₃ to C₂₀ cycloaliphatic radical, or a C₃ to C₂₀ aromatic radical; and
d is an integer from 1 to 500.

13. A method for preparing a polyarylate-siloxane copolymer, said method comprising:
reacting in the presence of at least one catalyst and at least one substantially water-immiscible organic solvent
(i) at least one dihydroxy aromatic compound III 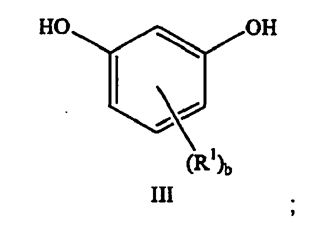
(ii) at least one aromatic dicarboxylic acid halide IV 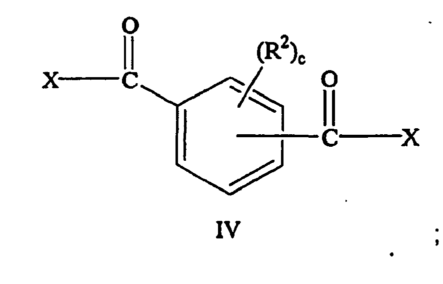 and
(iii) at least one hydroxy organosiloxane compound derived from at least one hydroxy organosiloxane compound of Formula VII 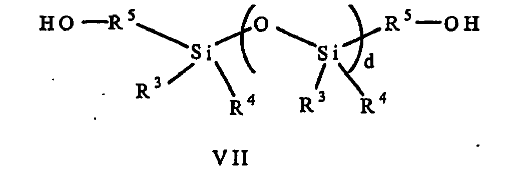 wherein
R³ and R⁴ are independently at each occurrence a hydrogen atom, a hydroxyl group, a C₁ to C₂₀ aliphatic radical, a C₃ to C₂₀ cycloaliphatic radical, a C₃ to C₂₀ aromatic radical, or R³ and R⁴ may together form a silicon-containing C₃ to C₂₀ cycloaliphatic radical or a C₃ to C₂₀ aromatic radical;
R⁵ is a C₃ to C₂₀ aromatic radical, and
d is an integer from 1 to 500;
to provide a polyarylate-siloxane copolymer comprising structural units having Formula XVIII 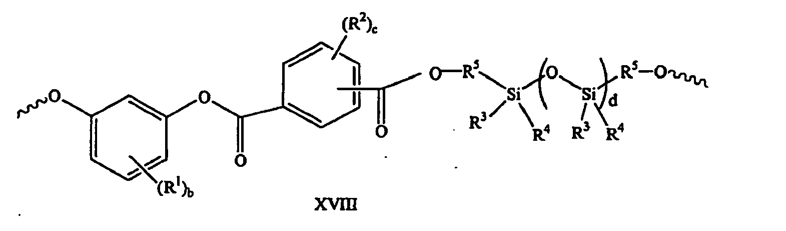 wherein
R¹ and R² are independently at each occurrence a halogen atom, a nitro group, a C₁ to C₂₀ aliphatic radical, a C₃ to C₂₀ cycloaliphatic radical, or a C₃ to C₂₀ aromatic radical;
b and c are independently integers having a value 0 to 4;
R³ and R⁴ are independently at each occurrence a hydrogen atom, a hydroxyl group, a C₁ to C₂₀ aliphatic radical, a C₃ to C₂₀ cycloaliphatic radical, a C₃ to C₂₀ aromatic radical, or R³ and R⁴ may together form a silicon-containing C₃ to C₂₀ cycloaliphatic radical or a C₃ to C₂₀ aromatic radical;
R⁵ is a C₁ to C₂₀ aliphatic radical, a C₃ to C₂₀ cycloaliphatic radical or a C₃ to C₂₀ aromatic radical; and
d is an integer from 1 to 500.

14. The composition of claim 1 further comprising at least one additive selected from the group consisting of colorant, filler, fire retardant, UV stabilizer, antistatic agent, acid scavenger and visual effect enhancer.

15. A molded article comprising the composition of claim 1.

## Patentansprüche

1. Zusammensetzung aus einem Polyarylat-Siloxan-Copolymer, wobei das Copolymer Folgendes umfasst:
(i) Arylatstruktureinheiten mit der Formel I 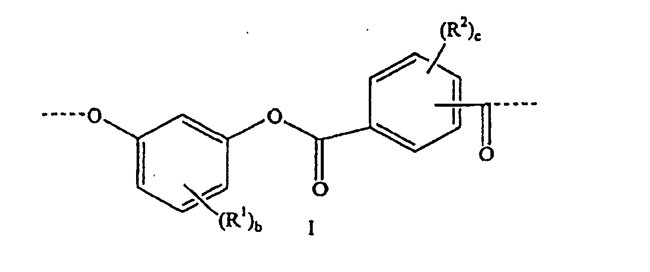 worin
R¹ und R² unabhängig voneinander bei jedem Vorkommen ein Halogenatom, eine Nitrogruppe, ein aliphatisches C₁- bis C₂₀-Radikal, ein cycloaliphatisches C₃- bis C₂₀-Radikal oder ein aromatisches C₃- bis C₂₀-Radikal sind,
b und c unabhängig voneinander ganze Zahlen mit einem Wert von 0 bis 4 sind; und
(ii) mindestens eine Organosiloxan-Struktureinheit, die von mindestens einer Hydroxyorganosiloxanverbindung der Formel VII hergeleitet ist 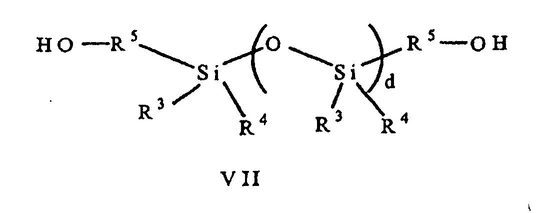 worin
R³ und R⁴ unabhängig voneinander bei jedem Vorkommen ein Wasserstoffatom, eine Hydroxylgruppe, ein aliphatisches C₁- bis C₂₀-Radikal, ein cycloaliphatisches C₃- bis C₂₀-Radikal, ein aromatisches C₃- bis C₂₀-Radikal sind oder R³ und R⁴ zusammen ein siliciumhaltiges cycloaliphatisches C₃- bis C₂₀-Radikal oder ein aromatisches C₃- bis C₂₀-Radikal bilden können;
R⁵ ein aromatisches C₃- bis C₂₀-Radikal ist; und
d eine ganze Zahl von 1 bis 500 ist;
wobei das Polyarylat-Siloxan-Copolymer frei von organischen Carbonatverknüpfungen ist.

2. Zusammensetzung nach Anspruch 1, wobei mindestens eines von R³ und R⁴ aus der aus einer Cyanogruppe und einem Wasserstoffatom bestehenden Gruppe ausgewählt ist.

3. Zusammensetzung nach Anspruch 1, wobei die Arylat-Struktureinheiten mit der Formel I 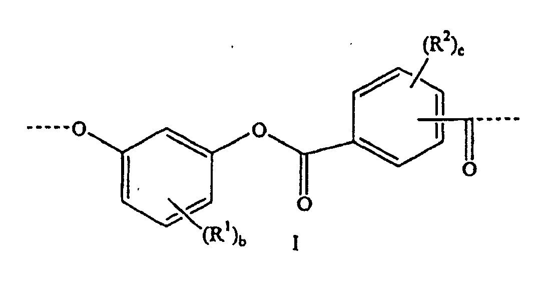 Struktureinheiten umfassen, die von mindestens einer dihydroxysubstituierten aromatischen Verbindung hergeleitet sind, sowie Struktureinheiten, die von mindestens einem aromatischen Dicarbonsäurehalogenid hergeleitet sind.

4. Zusammensetzung nach Anspruch 3,
(i) wobei die mindestens eine aromatische Dihydroxyverbindung ein 1,3-Dihydroxybenzol (III) ist 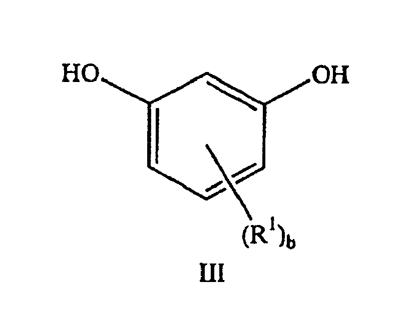 worin R¹ unabhängig voneinander bei jedem Vorkommen ein Halogenatom, eine Nitrogruppe, ein aliphatisches C₁- bis C₂₀-Radikal, ein cycloaliphatisches C₃- bis C₂₀-Radikal oder ein aromatisches C₃- bis C₂₀-Radikal ist; und b eine ganze Zahl von 0 bis 4 ist; oder i
(ii) wobei die mindestens eine aromatische Dihydroxyverbindung Resorcin ist; oder
(iii) wobei das mindestens eine aromatische Dicarbonsäurehalogenid eine Mischung von Isophthal- und Terephthalsäurehalogeniden mit der Formel (IV) umfasst 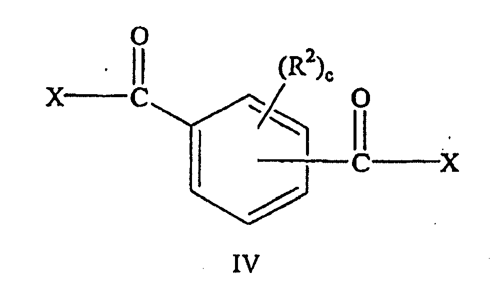 worin R² unabhängig voneinander bei jedem Vorkommen ein Halogenatom, eine Nitrogruppe, ein aliphatisches C₁- bis C₂₀-Radikal, ein cycloaliphatisches C₃- bis C₂₀-Radikal oder ein aromatisches C₃- bis C₂₀-Radikal ist; c eine ganze Zahl von 0 bis 4 ist; und X Halogen ist.

5. Zusammensetzung nach Anspruch 1, wobei das Polyarylat-Siloxan-Copolymer mindestens einen Polyarylatblock mit der Formel VI umfasst 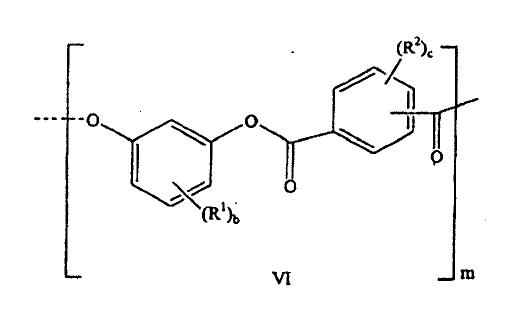 worin R¹ und R² unabhängig voneinander bei jedem Vorkommen ein Halogenatom, eine Nitrogruppe, ein aliphatisches C₁- bis C₂₀-Radikal, ein cycloaliphatisches C₃- bis C₂₀-Radikal oder ein aromatisches C₃- bis C₂₀-Radikal sind; b und c unabhängig voneinander ganze Zahlen von 0 bis 4 sind; und m eine ganze Zahl von 2 bis 100 ist.

6. Zusammensetzung nach Anspruch 1, wobei R⁵ ein aromatisches C₆- bis C₁₀-Radikal ist.

7. Zusammensetzung nach Anspruch 1, wobei die Hydroxyorganosiloxanverbindung VII mindestens ein Bisphenol umfasst, das aus der aus Eugenolsiloxanbisphenol IX, 4-Allyl-2-methylphenolsiloxan-Bisphenol X, 4-Allylphenolsiloxan-Bisphenol XI, 2-Allylphenolsiloxan-Bisphenol XII und 4-Vinylphenolsiloxan-Bisphenol XIV bestehenden Gruppe ausgewählt ist 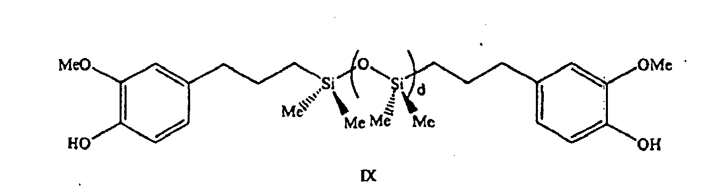 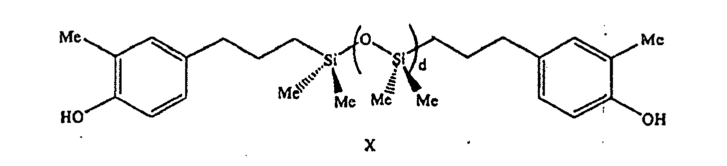 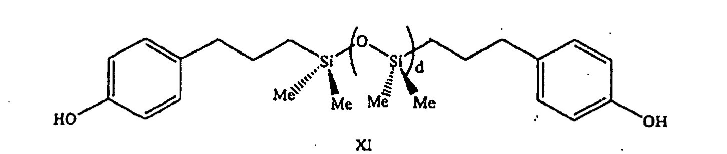 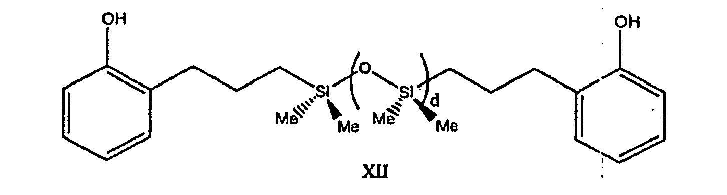 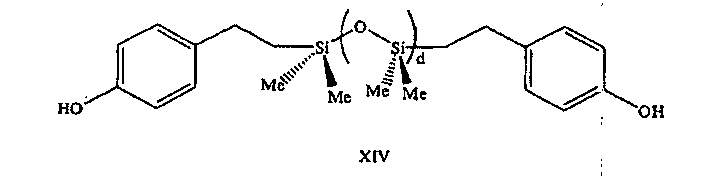 wobei in den Formeln IX, X, XI, XII und XIV d eine ganze Zahl mit einem Wert von 1 bis 500 ist.

8. Zusammensetzung nach Anspruch 1, wobei die Organosiloxan-Struktureinheiten in einer Menge entsprechend 1 bis 50 Gew.-% des Gesamtgewichts der Zusammensetzung vorliegen.

9. Zusammensetzung nach Anspruch 1, die ferner mindestens eine weiche Blockstruktureinheit XVI umfasst 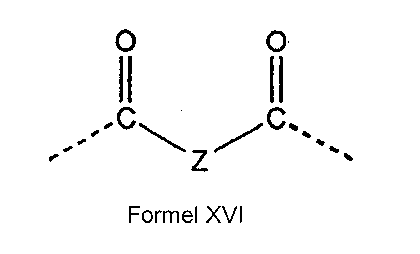 worin Z ein aliphatisches C₃- bis C₂₀₀-Radikal ist.

10. Zusammensetzung nach Anspruch 9, wobei die weiche Blockstruktureinheit aus der aus -CO(CH₂)₄CO-, -CO(CH₂)₆CO- und -CO(CH₂)₁₀CO- bestehenden Gruppe ausgewählt ist.

11. Zusammensetzung nach Anspruch 1, ferner umfassend Struktureinheiten, die von mindestens einem aliphatischen Diol hergeleitet sind, wobei das aliphatische Diol aus der aus 1,6-Hexandiol, Ethylenglycol, Diethylenglycol, Dipropylenglycol, Propylenglycol, 1,2-Butandiol, 1,3-butandiol, 1,4-Butandiol, 2,2-Bis(hydroxymethyl)propionsäure, Neopentylglycol und Polycaprolactondiol bestehenden Gruppe ausgewählt ist.

12. Zusammensetzung nach Anspruch 1, wobei das Polyarylat-Siloxan-Copolymer
Struktureinheiten XVIII umfasst 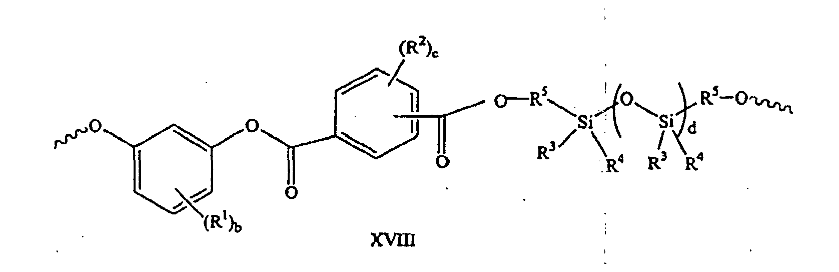 worin
R¹ und R² unabhängig voneinander bei jedem Vorkommen ein Halogenatom, eine Nitrogruppe, ein aliphatisches C₁- bis C₂₀-Radikal, ein cycloaliphatisches C₃- bis C₂₀-Radikal oder ein aromatisches C₃- bis C₂₀-Radikal sind;
b und c unabhängig voneinander ganze Zahlen mit einem Wert von 0 bis 4 sind;
R³ und R⁴ unabhängig voneinander bei jedem Vorkommen ein Wasserstoffatom, eine Hydroxylgruppe, ein aliphatisches C₁- bis C₂₀-Radikal, ein cycloaliphatisches C₃- bis C₂₀-Radikal, ein aromatisches C₃- bis C₂₀-Radikal sind oder R³ und R⁴ zusammen ein siliciumhaltiges cycloaliphatisches C₃- bis C₂₀-Radikal oder ein aromatisches C₃- bis C₂₀-Radikal bilden können;
R⁵ ein aliphatisches C₁- bis C₂₀-Radikal, ein cycloaliphatisches C₃- bis C₂₀-Radikal oder ein aromatisches C₃- bis C₂₀-Radikal ist; und
d eine ganze Zahl von 1 bis 500 ist.

13. Verfahren zur Herstellung eines Polyarylat-Siloxan-Copolymers, wobei das Verfahren den folgenden Schritt umfasst:
in Gegenwart mindestens eines Katalysators und mindestens eines im Wesentlichen mit Wasser nicht mischbaren organischen Lösungsmittels wird Folgendes umgesetzt:
(i) mindestens eine aromatische Dihydroxyverbindung III 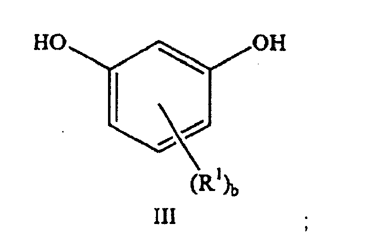
(ii) mindestens ein aromatisches Dicarbonsäurehalogenid IV 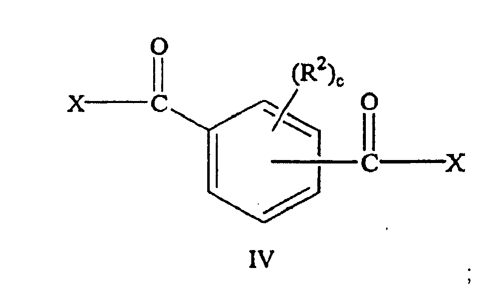 und
(iii) mindestens eine Hydroxyorganosiloxanverbindung, die hergeleitet ist von mindestens einer Hydroxyorganosiloxanverbindung der Formel VII 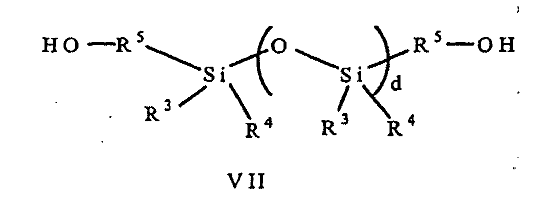 worin
R³ und R⁴ unabhängig voneinander bei jedem Vorkommen ein Wasserstoffatom, eine Hydroxylgruppe, ein aliphatisches C₁- bis C₂₀-Radikal, ein cycloaliphatisches C₃- bis C₂₀-Radikal, ein aromatisches C₃- bis C₂₀-Radikal sind, oder R³ und R⁴ zusammen ein siliciumhaltiges cycloaliphatisches C₃- bis C₂₀-Radikal oder ein aromatisches C₃- bis C₂₀-Radikal bilden können;
R⁵ ein aromatisches C₃- bis C₂₀-Radikal ist; und
d eine ganze Zahl von 1 bis 500 ist;
um ein Polyarylat-Siloxan-Copolymer bereitzustellen, das Struktureinheiten mit der Formel XVIII umfasst 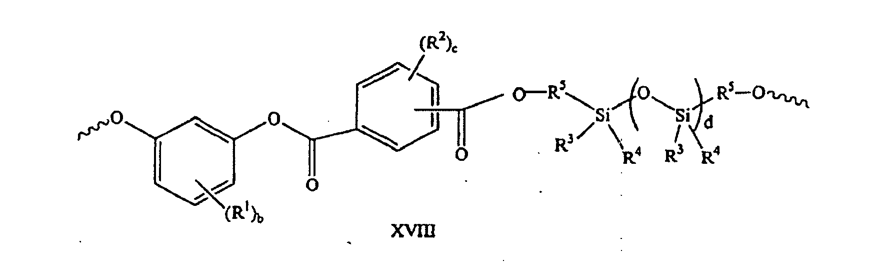 worin
R¹ und R² unabhängig voneinander bei jedem Vorkommen ein Halogenatom, eine Nitrogruppe, ein aliphatisches C₁- bis C₂₀-Radikal, ein cycloaliphatisches C₃- bis C₂₀-Radikal oder ein aromatisches C₃- bis C₂₀-Radikal sind;
b und c unabhängig voneinander ganze Zahlen mit einem Wert von 0 bis 4 sind;
R³ und R⁴ unabhängig voneinander bei jedem Vorkommen ein Wasserstoffatom, eine Hydroxylgruppe, ein aliphatisches C₁- bis C₂₀-Radikal, ein cycloaliphatisches C₃- bis C₂₀-Radikal, ein aromatisches C₃- bis C₂₀-Padikal sind oder R³ und R⁴ zusammen ein siliciumhaltiges cycloaliphatisches C₃- bis C₂₀-Radikal oder ein aromatisches C₃- bis C₂₀-Radikal bilden können;
R⁵ ein aliphatisches C₁- bis C₂₀-Radikal, ein cycloaliphatisches C₃- bis C₂₀-Radikal oder ein aromatisches C₃- bis C₂₀-Radikal ist; und
d eine ganze Zahl von 1 bis 500 ist.

14. Zusammensetzung nach Anspruch 1, ferner umfassend mindestens einen Zusatzstoff, der aus der aus einem Farbmittel, Füllstoff, Flammschutzmittel, UV-Stabilisator, Antistatikmittel, Säurefänger und Optikverbesserer bestehenden Gruppe ausgewählt ist.

15. Formteil aus der Zusammensetzung nach Anspruch 1.

## Revendications

1. Composition comprenant un copolymère de polyarylate-siloxane, ledit copolymère comprenant
(i) des motifs structurels arylate de formule I 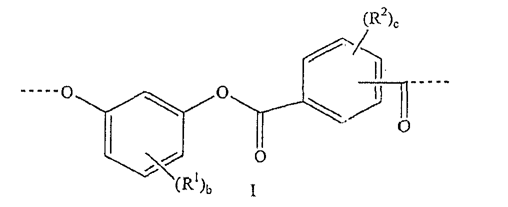 dans laquelle
R¹ et R², à chaque occurrence, sont indépendamment un atome d'halogène, un groupe nitro, un radical aliphatique en C₁ à C₂₀, un radical cycloaliphatique en C₃ à C₂₀, ou un radical aromatique en C₃ à C₂₀,
"b" et "c" sont indépendamment des entiers valant de 0 à 4 ; et
(ii) au moins un motif structurel organosiloxane dérivé d'au moins un composé hydroxy-organosiloxane de formule VII 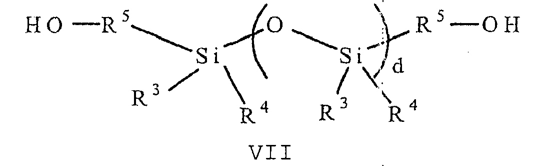 dans laquelle
R³ et R⁴, à chaque occurrence, sont indépendamment un atome d'hydrogène, un groupe hydroxyle, un radical aliphatique en C₁ à C₂₀, un radical cycloaliphatique en C₃ à C₂₀, un radical aromatique en C₃ à C₂₀, ou bien R³ et R⁴ peuvent former ensemble un radical cycloaliphatique en C₃ à C₂₀ contenant du silicium ou un radical aromatique en C₃ à C_{20;}
R⁵ est un radical aromatique en C₃ à C₂₀, et
d est un entier de 1 à 500 ;
dans laquelle ledit copolymère de polyarylate-siloxane est exempt de liaisons carbonate organiques.

2. Composition selon la revendication 1, dans laquelle au moins l'un de R³ et R⁴ est choisi dans l'ensemble constitué par un groupe cyano et un atome d'hydrogène.

3. Composition selon la revendication 1, dans laquelle les motifs structurels arylate de formule I 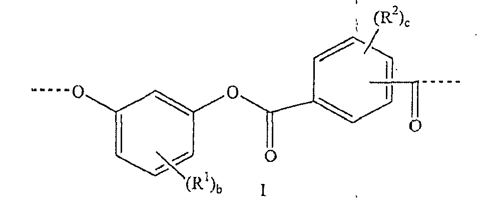 comprennent des motifs structurels dérivés d'au moins un composé aromatique à substitution dihydroxy et des motifs structurels dérivés d'au moins un halogénure d'acide dicarboxylique aromatique.

4. Composition selon la revendication 3,
(i) dans laquelle l'au moins un composé dihydroxy-aromatique est un 1,3-dihydroxybenzène (III) 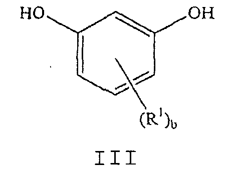 où R¹, à chaque occurrence, est indépendamment un atome d'halogène, un groupe nitro, un radical aliphatique en C₁ à C₂₀, un radical cycloaliphatique en C₃ à C₂₀, ou un radical aromatique en C₃ à C₂₀ et b est un entier de 0 à 4 ; ou
(ii) dans laquelle l'au moins un composé dihydroxy-aromatique est le résorcinol ; ou
(iii) dans laquelle l'au moins un halogénure d'acide dicarboxylique aromatique comprend un mélange d'halogénures d'acides isophtalique et téréphtalique de formule (IV) 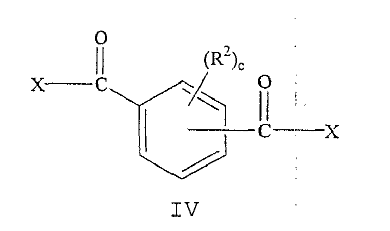 où R², à chaque occurrence, est indépendamment un atome d'halogène, un groupe nitro, un radical aliphatique en C₁ à C₂₀, un radical cycloaliphatique en C₃ à C₂₀, ou un radical aromatique en C₃ à C₂₀ ; c est un entier de 0 à 4 ; et X est un halogène.

5. Composition selon la revendication 1, dans laquelle le copolymère de polyarylate-siloxane comprend au moins un bloc polyarylate de formule VI 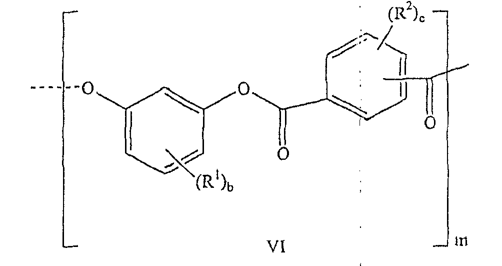 dans laquelle R¹ et R², à chaque occurrence, sont indépendamment un atome d'halogène, un groupe nitro, un radical aliphatique en C₁ à C₂₀, un radical cycloaliphatique en C₃ à C₂₀, ou un radical aromatique en C₃ à C₂₀ ; b et c sont indépendamment des entiers de 0 à 4 ; et m est un entier de 2 à 100.

6. Composition selon la revendication 1, dans laquelle R⁵ est un radical aromatique en C₆ à C₁₀.

7. Composition selon la revendication 1, dans laquelle ledit composé hydroxy-organosiloxane VII comprend au moins un bisphénol choisi dans l'ensemble constitué par l'eugénol-siloxane-bisphénol IX, le 4-allyl-2-méthylphénol-siloxane-bisphénol X, le 4-allylphénol-siloxane-bisphénol XI, le 2-allylphénol-siloxane-bisphénol XII, et le 4-vinylphénol-siloxane-bisphénol XIV 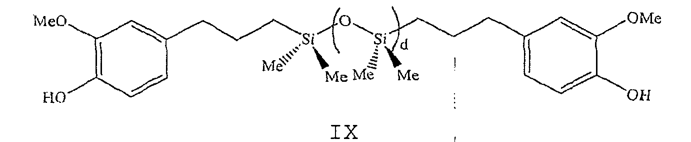 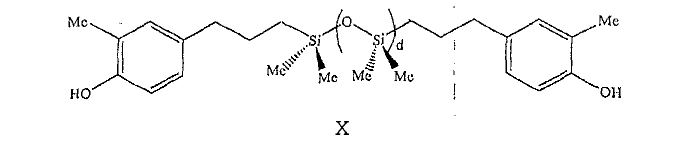 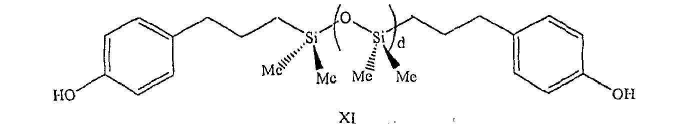 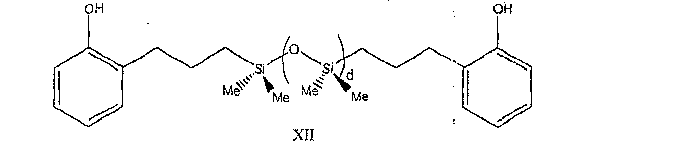 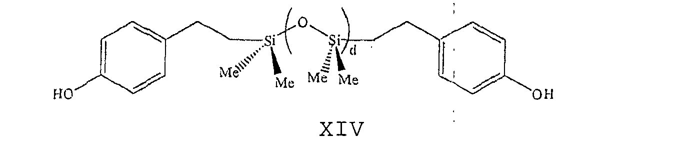 où, dans les formules IX, X, XI, XII et XIV, d est un entier valant de 1 à 500.

8. Composition selon la revendication 1, dans laquelle lesdits motifs structurels organosiloxane sont présents en une quantité correspondant à 1 à 50 % en poids par rapport au poids total de la composition.

9. Composition selon la revendication 1, comprenant en outre au moins un motif structurel de bloc mou XVI 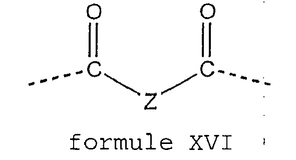 dans laquelle Z est un radical aliphatique en C₃ à C₂₀₀.

10. Composition selon la revendication 9, dans laquelle le motif structurel de bloc mou est choisi dans l'ensemble constitué par -CO(CH₂)₄CO-, -CO(CH₂)₆CO- et -CO(CH₂)₁₀CO-.

11. Composition selon la revendication 1, comprenant en outre des motifs structurels dérivés d'au moins un diol aliphatique, dans laquelle le diol aliphatique est choisi dans l'ensemble constitué par le 1,6-hexanediol, l'éthylèneglycol, le diéthylèneglycol, le dipropylèneglycol, le propylèneglycol, le 1,2-butanediol, le 1,3-butanediol, le 1,4-butanediol, l'acide 2,2-bis(hydroxyméthyl)propionique, le néopentylglycol, et le polycaprolactonediol.

12. Composition selon la revendication 1, dans laquelle ledit copolymère de polyarylate-siloxane comprend des motifs structurels XVIII 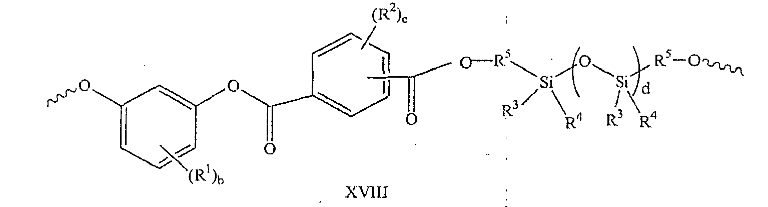 dans laquelle
R¹ et R², à chaque occurrence, sont indépendamment un atome d'halogène, un groupe nitro, un radical aliphatique en C₁ à C₂₀, un radical cycloaliphatique en C₃ à C₂₀, ou un radical aromatique en C₃ à C₂₀ ;
b et c sont indépendamment des entiers valant de 0 à 4;
R³ et R⁴, à chaque occurrence, sont indépendamment un atome d'hydrogène, un groupe hydroxyle, un radical aliphatique en C₁ à C₂₀, un radical cycloaliphatique en C₃ à C₂₀, un radical aromatique en C₃ à C₂₀, ou bien R³ et R⁴ peuvent former ensemble un radical cycloaliphatique en C₃ à C₂₀ contenant du silicium ou un radical aromatique en C₃ à C₂₀ ;
R⁵ est un radical aliphatique eh C₁ à C₂₀, un radical cycloaliphatique en C₃ à C₂₀, ou un radical aromatique en C₃ à C₂₀ ; et
d est un entier valant de 1 à 500.

13. Procédé pour préparer un copolymère de polyarylate-siloxane, ledit procédé comprenant :
la réaction, en présence d'au moins un catalyseur et d'au moins un solvant organique pratiquement non miscible avec l'eau
(i) d'au moins un composé dihydroxy-aromatique III 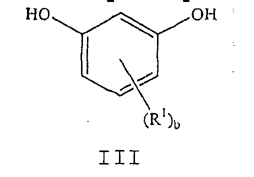
(ii) d'au moins un halogénure d'acide dicarboxylique aromatique IV 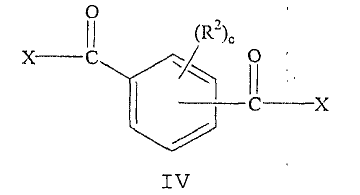 et
(iii) d'au moins un composé hydroxy-organosiloxane dérivé d'au moins un composé hydroxy-organosiloxane de formule VII 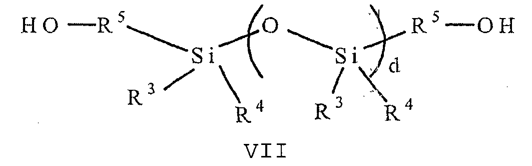 dans laquelle
R³ et R⁴, à chaque occurrence, sont indépendamment un atome d'hydrogène, un groupe hydroxyle, un radical aliphatique en C₁ à C₂₀, un radical cycloaliphatique en C₃ à C₂₀, un radical aromatique en C₃ à C₂₀, ou bien R³ et R⁴ peuvent former ensemble un radical cycloaliphatique en C₃ à C₂₀ contenant du silicium ou un radical aromatique en C₃ à C₂₀ ;
R⁵ est un radical aromatique en C₃ à C₂₀, et
d est un entier de 1 à 500 ;
pour former un copolymère de polyarylate-siloxane comprenant des motifs structurels de formule XVIII 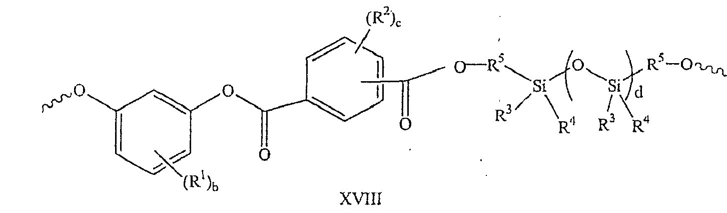 dans laquelle
R¹ et R², à chaque occurrence, sont indépendamment un atome d'halogène, un groupe nitro, un radical aliphatique en C₁ à C₂₀, un radical cycloaliphatique en C₃ à C₂₀, ou un radical aromatique en C₃ à C₂₀ ;
b et c sont indépendamment des entiers valant de 0 à 4;
R³ et R⁴, à chaque occurrence, sont indépendamment un atome d'hydrogène, un groupe hydroxyle, un radical aliphatique en C₁ à C₂₀, un radical cycloaliphatique en C₃ à C₂₀, un radical aromatique en C₃ à C₂₀, ou bien R³ et R⁴ peuvent former ensemble un radical cycloaliphatique en C₃ à C₂₀ contenant du silicium ou un radical aromatique en C₃ à C₂₀ ;
R⁵ est un radical aliphatique en C₁ à C₂₀, un radical cycloaliphatique en C₃ à C₂₀, ou un radical aromatique en C₃ à C₂₀ ; et
d est un entier valant de 1 à 500.

14. Composition selon la revendication 1, comprenant en outre au moins un additif choisi dans l'ensemble constitué par un colorant, une charge, un retardateur d'inflammation, un stabilisant UV, un agent antistatique, un piégeur d'acide et un agent amplifiant les effets visuels.

15. Article moulé comprenant la composition de la revendication 1.
